# NEW EUROPEAN PATENT SPECIFICATION

(11) **EP 0 763 329 B2**
(45) Date of publication and mention of the opposition decision: **29.06.2011**
(45) Mention of the grant of the patent: 26.11.2003
(21) Application number: 95306436.7
(22) Date of filing: 13.09.1995
(51) Int. Cl.: A23G 4/00

(54) **Chewing gum manufacture using high efficiency continuous mixer**
Herstellung von Kaugummi mittels kontinuierlichem Mischer mit hohem Wirkungsgrad
Fabrication de chewing-gum au moyen d'un mélangeur continu à haut rendement

(43) Date of publication of application: 19.03.1997
(73) Proprietor: WM. WRIGLEY JR. COMPANY, Chicago, Illinois 60611 (US)
(72) Inventor: Wolfe, John T., Streamwood, Illinois (US); Song, Joo H., North Brook, Illinois 60062 (US); Sundstrom, Christafor E., Glen Ellyn, Illinois 60137 (US); Record, David W., River Forest, Illinois 60305 (US); Townsend, Donald J., Chicago, Illinois 60614 (US); Broderick, Kevin B., Berwyn, Illinois 60402 (US); Schnell, Philip G., Downers Grove, Illinois 60515 (US)
(74) Representative: Hayes, Adrian Chetwynd

(56) References cited:
- EP-A2- 0 273 809
- WO-A1-95/10194
- 'EXTRUSION: DOES CHEWING GUM PASS THE TASTE TEST?' FOOD MANUFACTURE vol. 62, no. 9, LONDON GB, pages 47 - 50, XP000564540

## Description

### FIELD OF THE INVENTION

This invention is a process for the total manufacture of chewing gum base and chewing gum using a single high efficiency continuous mixer.

### BACKGROUND OF THE INVENTION

Conventionally, chewing gum base and chewing gum product have been manufactured using separate mixers, different mixing technologies and, often, at different factories. One reason for this is that the optimum conditions for manufacturing gum base, and for manufacturing chewing gum from gum base and other ingredients such as sweeteners and flavors, are so different that it has been impractical to integrate both tasks. Chewing gum base manufacture, on the one hand, involves the dispersive (often high shear) mixing of difficult-to-blend ingredients such as elastomer, filler, elastomer plasticizer, base softeners/-emulsifiers and, sometimes wax, and typically requires long mixing times. Chewing gum product manufacture, on the other hand, involves combining the gum base with more delicate ingredients such as product softeners, bulk sweeteners, high intensity sweeteners and flavoring agents using distributive (generally lower shear) mixing, for shorter periods.

In order to improve the efficiency of gum base and gum product manufacture, there has been a trend toward the continuous manufacture of chewing gum bases and products. U.S. Patent 3,995,064, issued to Ehrgott et al., discloses the continuous manufacture of gum base using a sequence of mixers or a single variable mixer. U.S. Patent 4,459,311, issued to DeTora et al., also discloses the continuous manufacture of gum base using a sequence of mixers. Other continuous gum base manufacturing processes are disclosed in European Publication No. 0,273,809 (General Foods France), in French Publication No. 2,635,441 (General Foods France) and in PCT publication WO 95/10 194.

U.S. Patent 5,045,325, issued to Lesko et al., and U.S. Patent 4,555,407, issued to Kramer et al., disclose processes for the continuous production of chewing gum products. In each case, however, the gum base is initially prepared separately and is simply added into the process. U.S. Patent 4,968,511, issued to D'Amelia et al., discloses a chewing gum product containing certain vinyl polymers which can be produced in a direct one-step process not requiring separate manufacture of gum base. However, the disclosure focuses on batch mixing processes not having the efficiency and product consistency achieved with continuous mixing. Also, the single-step processes are limited to chewing gums containing unconventional bases which lack elastomers and other critical ingredients.

The serial publication "Food Manufacture" v. 62 , Sept. 1987, n° 9 pp. 47-50, describes the manufacturce of chewing gum by extrusion technology.

In order to simplify and minimize the cost of chewing gum manufacture, there is a need or desire in the chewing gum industry for an integrated continuous manufacturing process having the ability to combine chewing gum base ingredients and other chewing gum ingredients in a single mixer, which can be used to manufacture a wide variety of chewing gums.

According to the present invention, there is provided a method of manufacturing chewing gum as defined in claim 1.

A high efficiency continuous mixer is one which is capable of providing thorough mixing over a relatively short distance or length of the mixer. This distance is expressed as a ratio of the length of a particular active region of the mixer screw, which is composed of mixing elements, divided by the maximum diameter of the mixer barrel in this active region.

In an embodiment, it is preferred that the gum base ingredients be completely added and mixed upstream from the remaining chewing gum ingredients, and that the remaining ingredients be completely added downstream for mixing with the already blended gum base. However, the invention also includes those variations wherein a portion of the gum base ingredients may be added downstream with or after some of the remaining ingredients, and/or wherein a portion of the remaining (non-base) ingredients are added upstream with or before some of the base ingredients.

With the foregoing in mind, it is in one embodiment an advantage of the invention to provide, in an embodiment, a continuous method for manufacturing chewing gum which does not require a separate manufacture of chewing gum base.

It is also an advantage of one embodiment of the invention to provide a method of increasing throughput of the extruder.

It is also an advantage of one embodiment of the invention, in an embodiment, to provide a continuous method for making chewing gum which can accomplish every essential mixing step using a single mixer.

It is also an advantage of one embodiment of the invention to provide a continuous method for making chewing gum which requires less equipment, less capital investment, and less labor than conventional manufacturing methods.

It is also an advantage of one embiment of the invention to provide a continuous manufacturing method that produces chewing gum having greater product consistency, less thermal degradation, less thermal history, and less contamination than chewing gum produced using conventional processes that require longer manufacturing times and more manufacturing steps.

The foregoing and other features and advantages of the invention will become further apparent from the following detailed description of the presently preferred embodiments, read in conjunction with the accompanying examples and drawings. The detailed description, examples and drawings are intended to be merely illustrative rather than limiting, the scope of the invention being defined by the appended claims and equivalents thereof.

### BRIEF DESCRIPTION OF THE DRAWINGS

Fig. 1 is a perspective view of a Buss high efficiency mixer illustrating a mixing barrel and mixing screw arrangement.

Fig. 2A is a perspective view of an on-screw element used on the upstream side of a restriction ring assembly, in the high efficiency mixer configuration.

Fig. 2B is a perspective view of an on-screw element used on the downstream side of the restriction ring assembly in the high efficiency mixer configuration.

Fig. 2C is a perspective view of a restriction ring assembly used in the high efficiency mixer configuration.

Fig. 3 is a perspective view showing the relative positioning of the elements of Figs. 2A, 2B and 2C in the high efficiency mixer configuration.

Fig. 4 is a perspective view of a low-shear mixing screw element used in the high efficiency mixer configuration.

Fig. 5 is a perspective view of a high-shear mixing screw element used in the high efficiency mixer configuration.

Fig. 6 is a perspective view of a barrel pin element used in the high efficiency mixer configuration.

Fig. 7 is a schematic diagram of an arrangement of mixing barrel pins and ingredient feed ports.

Fig. 8 is a schematic diagram of a mixing screw configuration.

### DETAILED DESCRIPTION OF THE PRESENTLY PREFERRED EMBODIMENTS

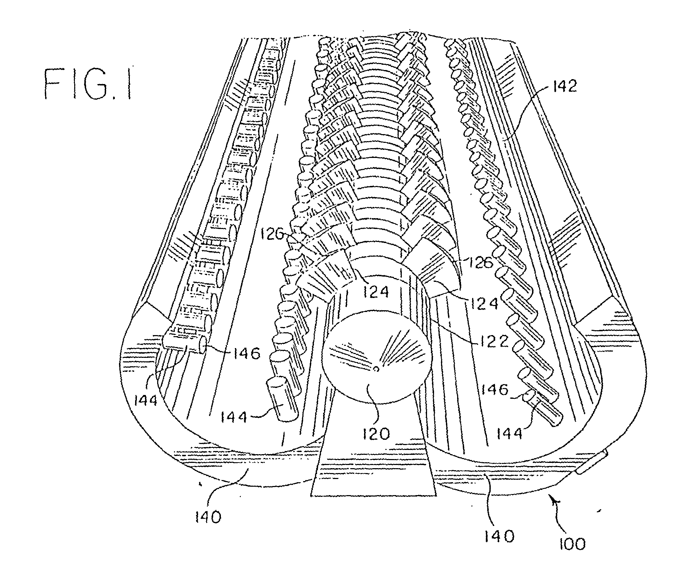

The present invention provides methods for the manufacture of chewing gum. In an embodiment, the present invention provides a method for the total manufacture of chewing gum using a single continuous high-efficiency mixer, without requiring the separate manufacture of chewing gum base. This method can be advantageously performed using a continuous mixer whose mixing screw is composed of precisely arranged mixing elements and conveying elements. The mixer is a blade-and-pin mixer which is exemplified in Fig. 1. A blade-and-pin mixer uses a combination of selectively configured rotating mixer blades and stationary barrel pins to provide efficient mixing over a relatively short distance. A commercially available blade-and-pin mixer is the Buss kneader, manufactured by Buss AG in Switzerland, and available from Buss America, located in Bloomingdale, Illinois.

Referring to Fig. 1, the blade-and-pin mixer 100 includes a single mixing screw 120 turning inside a barrel 140 which, during use, is generally closed and completely surrounds the mixing screw 120. The mixing screw 120 includes a generally cylindrical shaft 122 and three rows of mixing blades 124 arranged at evenly spaced locations around the screw shaft 122 (with only two of the rows being visible in Fig. 1). The mixing blades 124 protrude radially outward from the shaft 122, with each one resembling the blade of an axe.

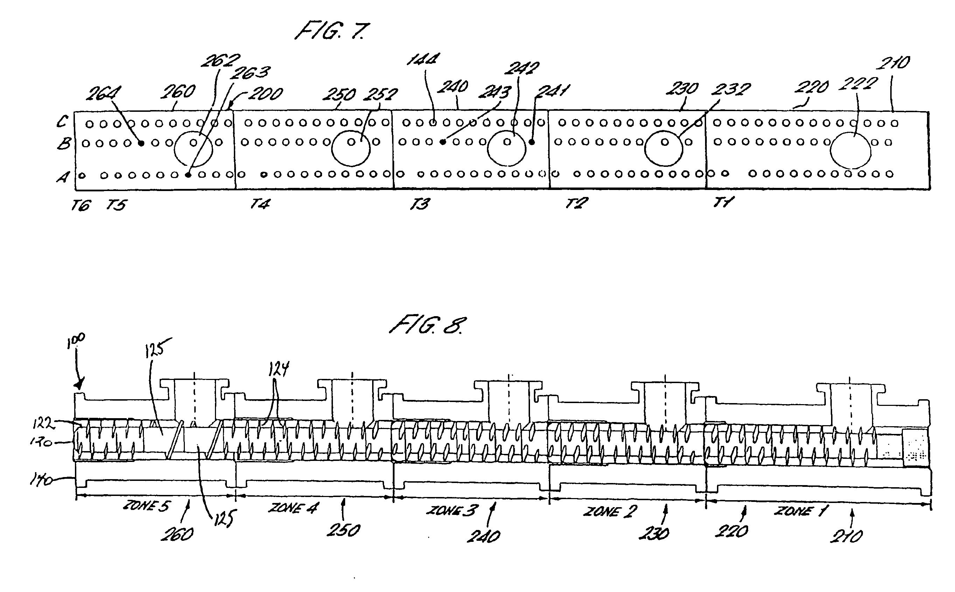

As set forth below, and as illustrated in Fig. 8, pursuant to the present invention, the screw shaft 122 of the mixer includes conveyor elements 125. Although generally steps are taken to maximize the mixing efficiency of an extruder to allow the process to be completed in the limited L/D available of the extruder, at certain points in the extruder the mixing may become excessive. This can adversely effect product quality and reduce volumetric efficiency (throughput). Although a possible solution might be to shorten the L/D at those points, this may not be practical because the distance may be mandated by the distance between addition ports or other controllable aspects of the particular extruder design.

The use of conveyor elements 125, as a substitute for certain of the mixing elements 124, at one or more points along the shaft 122 has been found to reduce overmixing and increase throughput without altering the basic design of the extruder. These conveyor elements 125 are typically helical screws. They can be located at a variety of positions on the screw 122.

Pursuant to the present invention, at least one of the conveyor elements is located in a position that is not directly under an ingredient addition port having an opening into the mixer. As used herein, the term "not directly under" means that no significant portion of the element is located adjacent the port. However, it is acceptable for a small overlap to occur between the element and port, so long as the majority of the element extends beyond the wall of the port.

As illustrated, the mixer 100 includes a mixing barrel 140 that includes an inner barrel housing 142 which is generally cylindrical when the barrel 140 is closed around the screw 120 during operation of the mixer 100. Three rows of stationary pins 144 are arranged at evenly spaced locations around the screw shaft 122, and protrude radially inward from the barrel housing 142. The pins 144 are generally cylindrical in shape, and may have rounded or bevelled ends 146.

In the mixer, the mixing screw 120 with blades 124 rotates inside the barrel 140 and is driven by a variable speed motor (not shown). During rotation, the mixing screw 120 also moves back and forth in an axial direction, creating a combination of rotational and axial mixing which is highly efficient. During mixing, the mixing blades 124 and conveyor elements 125 continually pass between the stationary pins 144, yet never touch each other. Also, the radial edges 126 of the blades 124 never touch the barrel inner surface 142, and the ends 146 of the pins 144 never touch the mixing screw shaft 122. During rotation, the mixing elements and conveyor elements act on the chewing gum ingredients.

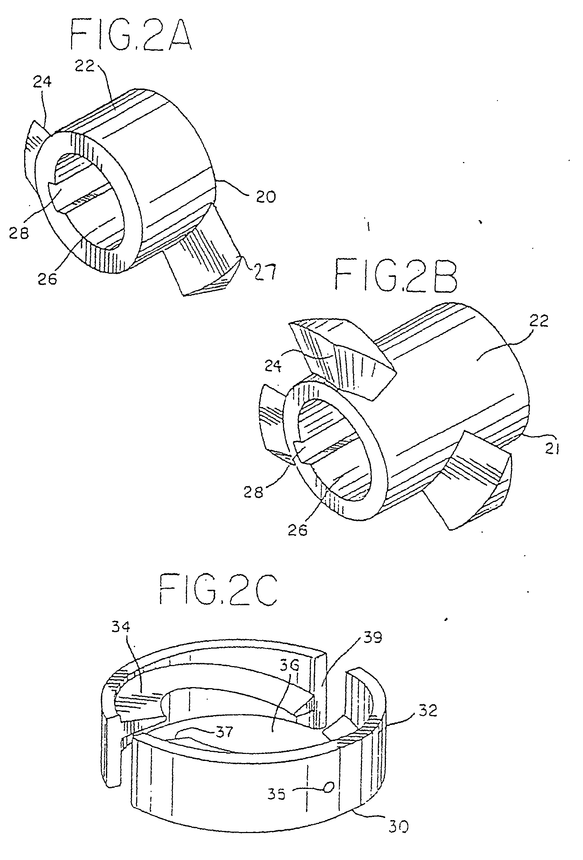

Figs. 2-6 illustrate various screw elements which can be used to configure the mixing screw 120 for optimum use. Figs. 2A and 2B illustrate on-screw elements 20 and 21 which are used in conjunction with a restriction ring assembly. The on-screw elements 20 and 21 each include a cylindrical outer surface 22, a plurality of blades 24 projecting outward from the surface 22, and an inner opening 26 with a keyway 28 for receiving and engaging a mixing screw shaft (not shown). The second on-screw element 21 is about twice as long as the first on-screw element 20.

Fig. 2C illustrates a restriction ring assembly 30 used to build back pressure at selected locations along the mixing screw 120. The restriction ring assembly 30 includes two halves 37 and 39 mounted to the barrel housing 142, which halves engage during use to form a closed ring. The restriction ring assembly 30 includes a circular outer rim 32, an inner ring 34 angled as shown, and an opening 36 in the inner ring which receives, but does not touch, the on-screw elements 20 and 21 mounted to the screw shaft. Mounting openings 35 in the surface 32 of both halves of the restriction ring assembly 30 are used to mount the halves to the barrel housing 142 or 342.

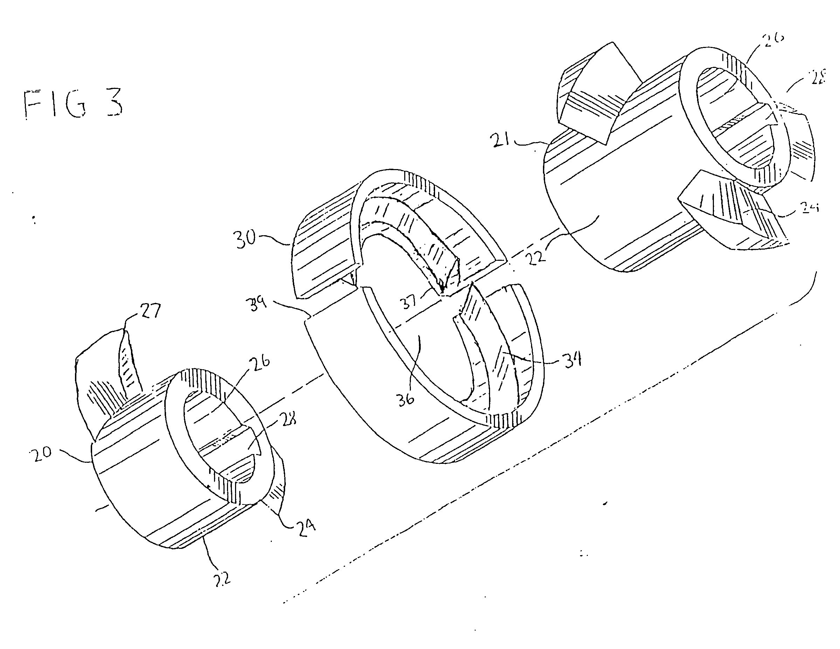

Fig. 3 illustrates the relationship between the restriction ring assembly 30 and the on-screw elements 20 and 21 during operation. When the mixing screw 120 is turning inside the barrel 140, and reciprocating axially, the clearances between the on-screw elements 20 and 21 and the inner ring 34 provide the primary means of passage of material from one side of the restriction ring assembly 30 to the other. The on-screw element 20 on the upstream side of the restriction ring assembly includes a modified blade 27 permitting clearance of the inner ring 34. The other on-screw element 21 is placed generally downstream of the restriction ring assembly 30, and has an end blade (not visible) which moves close to and wipes the opposite surface of the inner ring 34.

The clearances between outer surfaces 22 of the on-screw elements 20 and 21 and the inner ring 34 of the restriction ring assembly 30, which can vary and preferably are on the order of 1-5 mm, determine to a large extent how much pressure build-up will occur in the upstream region of the restriction ring assembly 30 during operation of the mixer 100. It should be noted that the upstream on-screw element 20 has an L/D of about 1/3, and the downstream on-screw element 21 has an L/D of about 2/3, resulting in a total L/D of about 1.0 for the on-screw elements. The restriction ring assembly 30 has a smaller L/D of about 0.45 which coincides with the L/D of the on-screw elements 20 and 21, which engage each other but do not touch the restriction ring assembly.

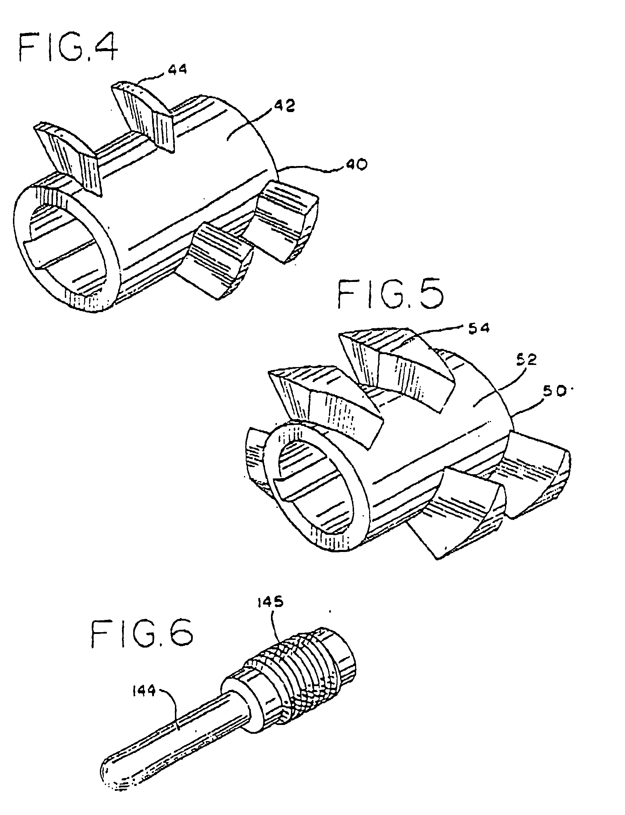

Figs. 4 and 5 illustrate the mixing or "kneading" elements which perform most of the mixing work. The primary difference between the lower shear mixing element 40 of Fig. 4 and the higher shear mixing element 50 of Fig. 5 is the size of the mixing blades which project outward on the mixing elements. In Fig. 5, the higher shear mixing blades 54 which project outward from the surface 52 are larger and thicker than the lower shear mixing blades 44 projecting outward from the surface 42 in Fig. 4. For each of the mixing elements 40 and 50, the mixing blades are arranged in three circumferentially-spaced rows, as explained above with respect to Fig. 1. The use of thicker mixing blades 54 in Fig. 5 means that there is less axial distance between the blades and also less clearance between the blades 54 and the stationary pins 144 as the screw 120 rotates and reciprocates axially (Fig. 1). This reduction in clearance causes inherently higher shear in the vicinity of the mixing elements 50.

Fig. 6 illustrates a single stationary pin 144 detached from the barrel 140. The pin 144 includes a threaded base 145 which permits attachment at selected locations along the inner barrel shaft 142. It is also possible to configure some of the pins 144 as liquid injection ports by providing them with hollow center openings.

Fig. 7 is a schematic view showing a barrel configuration, including an arrangement of barrel pins 144. Fig. 8 is a corresponding schematic view illustrating a mixing screw configuration. The mixer 200 whose preferred configuration is illustrated in Figs. 7 and 8 has an overall active mixing L/D of about 20.

The mixer 200 includes an initial feed zone 210 and five mixing zones 220, 230, 240, 250 and 260. The zones 210, 230, 240, 250 and 260 include five possible large feed ports 212, 232, 242, 252 and 262, respectively, which can be used to add major (e.g. solid) ingredients to the mixer 200. The zones 240 and 260 are also configured with five smaller liquid injection ports 241, 243, 261, 263 and 264 which are used to add liquid ingredients. The liquid injection ports 241, 243, 261, 263 and 264 include special barrel pins 144 formed with hollow centers, as explained above.

Referring to Fig. 7, barrel pins 144 are preferably present in most or all of the available locations, in all three rows as shown.

Referring to Fig. 8, a configuration of the mixing screw 120 is schematically illustrated as follows. Zone 210, which is the initial feed zone, is configured with four low shear and two high shear elements having a total L/D of 4.

A 57 mm restriction ring assembly 30 with cooperating on-screw elements 20 and 21, straddles the end of the first mixing zone 220 and the start of the second mixing zone 230. The assembly and element have a combined L/D of about 1.0, part of which is in the second mixing zone 230. Then, zone 230 is configured, from left to right, with three low shear mixing elements 40 and 1.5 high shear mixing elements 50. The three low shear mixing elements contribute about 2.0 L/D of mixing, and the 1.5 high shear mixing elements contribute about 1.0 L/D of mixing. Zone 230 has a total mixing L/D of about 4.0.

Straddling the end of the second mixing zone 230 and the start of the third mixing zone 240 is a 60mm restriction ring assembly 30 with cooperating on-screw elements 20 and 21 having an L/D of about 1.0. Then, zone 240 is configured, from left to right, with 4.5 high shear mixing elements 50 contributing a mixing L/D of about 3.0. Zone 240 also has a total mixing L/D of about 4.0.

Straddling the end of the third mixing zone 240 and the start of the fourth mixing zone 250 is another 60mm restriction ring assembly 30 with cooperating on-screw elements having an L/D of about 1.0. Then, the remainder of the fourth mixing zone 250 is configured with 5½ low shear mixing elements 40 contributing a mixing L/D of about 4. The fifth mixing zone 260 included, pursuant to the present invention, two conveyor elements having an L/D of 2. This is followed by 2½ low shear elements having a total L/D of 2¹/₃. The total screw length was 20¹/₃ L/D.

Before explaining where the various chewing gum ingredients are added to the continuous mixer 200, and how they are mixed, it is helpful to discuss the composition of typical chewing gums that can be made using the method of the invention. A chewing gum generally includes a water soluble bulk portion, a water insoluble chewing gum base portion, and one or more flavoring agents. The water soluble portion dissipates over a period of time during chewing. The gum base portion is retained in the mouth throughout the chewing process.

The insoluble gum base generally includes elastomers, elastomer plasticizers (resins), fats, oils, waxes, softeners and inorganic fillers. The elastomers may include polyisobutylene, isobutylene-isoprene copolymer, styrene butadiene copolymer and natural latexes such as chicle. The resins may include polyvinyl acetate and terpene resins. Low molecular weight polyvinyl acetate is a preferred resin. Fats and oils may include animal fats such as lard and tallow, vegetable oils such as soybean and cottonseed oils, hydrogenated and partially hydrogenated vegetable oils, and cocoa butter. Commonly used waxes include petroleum waxes such as paraffin and microcrystalline wax, natural waxes such as beeswax, candellia, carnauba and polyethylene wax.

The gum base typically also includes a filler component such as calcium carbonate, magnesium carbonate, talc, dicalcium phosphate and the like; softeners, including glycerol monostearate and glycerol triacetate; and optional ingredients such as antioxidants, color and emulsifiers. The gum base constitutes from 5 to 95% by weight of the chewing gum composition, more typically from 10 to 50% by weight of the chewing gum, and most commonly from 20 to 30% by weight of the chewing gum.

The water soluble portion of the chewing gum may include softeners, bulk sweeteners, high intensity sweeteners, flavoring agents and combinations thereof. Softeners are added to the chewing gum in order to optimize the chewability and mouth feel of the gum. The softeners, which are also known as plasticizers or plasticizing agents, generally constitute from 0.5 to 15% by weight of the chewing gum. The softeners may include glycerin, lecithin, and combinations thereof. Aqueous sweetener solutions such as those containing sorbitol, hydrogenated starch hydrolysates, corn syrup and combinations thereof, may also be used as softeners and binding agents in chewing gum.

Bulk sweeteners constitute from 5 to 95% by weight of the chewing gum, more typically from 20 to 80% by weight of the chewing gum and most commonly from 30 to 60% by weight of the chewing gum. Bulk sweeteners may include both sugar and sugarless sweeteners and components. Sugar sweeteners may include saccharide containing components including but not limited to sucrose, dextrose, maltose, dextrin, dried invert sugar, fructose, levulose, galactose, corn syrup solids, and the like, alone or in combination. Sugarless sweeteners include components with sweetening characteristics but are devoid of the commonly known sugars. Sugarless sweeteners include but are not limited to sugar alcohols such as sorbitol, mannitol, xylitol, hydrogenated starch hydrolysates, maltitol, and the like, alone or in combination.

High intensity sweeteners may also be present and are commonly used with sugarless sweeteners. When used, high intensity sweeteners typically constitute from 0.001 to 5% by weight of the chewing gum, preferably from 0.01 to 1% by weight of the chewing gum. Typically, high intensity sweeteners are at least 20 times sweeter than sucrose. These may include but are not limited to sucralose, aspartame, salts of acesulfame, alitame, saccharin and its salts, cyclamic acid and its salts, glycyrrhizin, dihydrochalcones, thaumatin, monellin, and the like, alone or in combination.

Combinations of sugar and/or sugarless sweeteners may be used in chewing gum. The sweetener may also function in the chewing gum in whole or in part as a water soluble bulking agent. Additionally, the softener may provide additional sweetness such as with aqueous sugar or alditol solutions.

Flavor should generally be present in the chewing gum in an amount within the range of from 0.1 to 15% by weight of the chewing gum, preferably from 0.2 to 5% by weight of the chewing gum, most preferably from 0.5 to 3% by weight of the chewing gum. Flavoring agents may include essential oils, synthetic flavors or mixtures thereof including but not limited to oils derived from plants and fruits such as citrus oils, fruit essences, peppermint oil, spearmint oil, other mint oils, clove oil, oil of wintergreen, anise and the like. Artificial flavoring agents and components may also be used in the flavor ingredient of the invention. Natural and artificial flavoring agents may be combined in any sensorially acceptable fashion.

Optional ingredients such as colors, emulsifiers, pharmaceutical agents and additional flavoring agents may also be included in chewing gum.

In accordance with one embodiment of the invention, the gum base and ultimate chewing gum product are made continuously in the same mixer. Generally, the gum base portion is made using a mixing L/D of about 25 or less, preferably about 20 or less, most preferably about 15 or less. Then, the remaining chewing gum ingredients are combined with the gum base to make a chewing gum product using a mixing L/D of about 15 or less, preferably about 10 or less, most preferably about 5 or less. The mixing of the gum base ingredients and the remaining chewing gum ingredients may occur in different parts of the same mixer or may overlap, so long as the total mixing is achieved using an L/D of about 40 or less, preferably about 30 or less, most preferably about 20 or less.

In a preferred blade-and-pin mixer arrangement, the total chewing gum can be made using a mixing L/D of about 20. The gum base can be made using an L/D of about 15 or less, and the remaining gum ingredients can be combined with the gum base using a further L/D of about 5 or less.

In order to accomplish the total chewing gum manufacture using the blade-and-pin mixer 200, it is advantageous to maintain the rpm of the mixing screw 120 at less than about 150, preferably less than about 125. Also, the mixer temperature is preferably optimized so that the gum base is at about 54°C (130°F) or lower when it initially meets the other chewing gum ingredients, and the chewing gum product is at about 54°C (130°F) or lower (preferably 52°C (125°F) or lower) when it exits the mixer. This temperature optimization can be accomplished, in part, by selectively heating and/or water cooling the barrel sections surrounding the mixing zones 220, 230, 240, 250 and 260.

In order to manufacture the gum base, the following procedure can be followed. The elastomer, filler, and at least some of the elastomer solvent are added to the first large feed port 212 in the feed zone 210 of the mixer 200, and are subjected to highly dispersive mixing in the first mixing zone 220 while being conveyed in the direction of the arrow 122. The remaining elastomer solvent (if any) and polyvinyl acetate are added to the second large feed port 232 in the second mixing zone 230, and the ingredients are subjected to a more distributive mixing in the remainder of the mixing zone 230.

Fats, oils, waxes (if used), emulsifiers and, optionally, colors and antioxidants, are added to the liquid injection ports 241 and 243 in the third mixing zone 240, and the ingredients are subjected to distributive mixing in the mixing zone 240 while being conveyed in the direction of the arrow 122. At this point, the gum base manufacture should be complete, and the gum base should leave the third mixing zone 240 as a substantially homogeneous, lump-free compound with a uniform color.

The fourth mixing zone 250 is used primarily to cool the gum base, although minor ingredient addition may be accomplished. Then, to manufacture the final chewing gum product, glycerin, corn syrup, other bulk sugar sweeteners, high intensity sweeteners, and flavors can be added to the fifth mixing zone 260, and the ingredients are subjected to distributive mixing. If the gum product is to be sugarless, hydrogenated starch hydrolyzate or sorbitol solution can be substituted for the corn syrup and powdered alditols can be substituted for the sugars.

Preferably, glycerin is added to the first liquid injection port 261 in the fifth mixing zone 260. Solid ingredients (bulk sweeteners, encapsulated high intensity sweeteners, etc.) are added to the large feed port 262. Syrups (corn syrup, hydrogenated starch hydrolyzate, sorbitol solution, etc.) are added to the next liquid injection port 263, and flavors are added to the final liquid injection port 264. Flavors can alternatively be added at ports 261 and 263 in order to help plasticize the gum base, thereby reducing the temperature and torque on the screw. This may permit running of the mixer at higher rpm and throughput.

The gum ingredients are compounded to a homogeneous mass which is discharged from the mixer as a continuous stream or "rope". The continuous stream or rope can be deposited onto a moving conveyor and carried to a forming station, where the gum is shaped into the desired form such as by pressing it into sheets, scoring, and cutting into sticks. Because the entire gum manufacturing process is integrated into a single continuous mixer, there is less variation in the product, and the product is cleaner and more stable due to its simplified mechanical and thermal histories.

A wide range of changes and modifications to the preferred embodiments of the invention will be apparent to persons skilled in the art. The above preferred embodiments, and the examples which follow, are merely illustrative of the invention and should not be construed as imposing limitations on the invention. For instance, different continuous mixing equipment and different mixer configurations can be used without departing from the invention as long as the preparation of a chewing gum base and chewing gum product are accomplished in a single continuous mixer using a mixing L/D of not more than about 40.

Examples 1-3, by way of example, and not limitation, illustrate an embodiment of the present invention using conveyor elements.

### Example 1

Several premix compositions were prepared to simplify the mixing process.

### Rubber Blend

Three parts butyl rubber were ground with one part calcium carbonate. 35.611% of the ground mixture was dry blended with 55.746% calcium carbonate and 8.643% Glycerol Ester of Hydrogenated Rosin.

### Polyvinyl Acetate Blend

43.618% low molecular weight PVAc was dry blended with 10.673% Glycerol Ester of Polymerized Rosin and 45.709% Glycerol Ester of Hydrogenated Rosin.

### Fat Blend

The following ingredients were melted and blended:

| | |
|---|---|
| 7.992% | Hydrogenated Soybean Oil |
| 13.712% | Hydrogenated Cottonseed Oil |
| 12.199% | Glycerol Monostearate |
| 37.070% | Paraffin Wax |
| 28.851% | Microcrystalline Wax |
| 0.176% | BHT |

### Corn Syrup/Glycerin Blend

93.713% 45.5 Baume corn syrup was heated and blended with 6.287% glycerin.

### Sugar/Color Blend

10% of a glycerin slurry of red lake was mixed with 90% sugar in a Hobart mixer. The resulting product was a damp powder which could be fed into the extruder with a twin screw volumetric feeder.

To the first port were added the Rubber Blend 15.7 kg (34.67 lbs/hr) and Molten Polyisobutylene 2.6 kg (5.80 lbs/hr).

Into the second port was added the Polyvinyl Acetate Blend at 11.3 kg (24.98 lbs)/hr.

Molten Fat Blend was injected in equal portions through two injection pins in section 3 at a total rate of 12.2 kg (26.98 lbs)/hr.

Heated Corn Syrup/Glycerin Blend was injected through a pin located at the beginning of Section 5 at a rate of 35.8 kg (78.92 lbs)/hr.

Sugar was added into port 5 at a rate of 128.5 kg (283.15 lbs)/hr along with the sugar/color blend at 6.3 kg (13.87 lbs)/hr.

Finally, cinnamon flavor was injected near the end of section 5 at a rate of 3.0 kg (6.62 lbs)/hr.

This produced a total output of approximately

This produced a total output of approximately 215.5 kg (475 lbs)/hr from the extruder.

The zone temperatures (Z₁ and Z₅ in) were set to 177°C (350°F) 121°C (250°F) 66°C (150°F) 13°C (55F) and 13°C (55°F). The screw was heated to 66°C (150°F).

The screw was configured as follows:

In the first barrel section, four low shear then two high shear elements having a total L/D of 4 were fitted to the screw shaft. Straddling the end of the first section and the beginning of the second was a 57 mm restriction ring which, along with its on-screw hardware, had a L/D of 1.

In the second section, three low shear elements then 1½ high shear elements having a total L/D of 3 were fitted. Straddling the end of the second section and beginning of the third was a 60 mm restriction ring (1 L/D).

The third section was fitted 4½ high shear elements (3 L/D). A 60 mm restriction ring (1 L/D) straddled the third and fourth sections.

The fourth section was fitted with six low shear elements (4 L/D) the last of which extended into the fifth section.

The fifth section was fitted with a conveyor element adjacent to the ingredient addition port and having an L/D of 1. This was followed by 3½ low shear elements having a total L/D of 2¹/₃. The total screw length was 20¹/₃ L/D.

With this configuration, it was necessary to operate the screw at 125 rpm in order to prevent a backup of sugar in the fifth intake port. The finished gum exited at 54°C (129°F). Both the screw speed and the exit temperature were considered excessive.

### Example 2

The screw profile in Example 1 was then altered by adding a second conveyor element immediately after the first in the fifth section. In order to accommodate the new element, a half low shear element was substituted for one of the full elements just prior to the first conveyor element and another low shear element after the conveyor elements was eliminated.

Otherwise, this run was identical to Example 1. However, it was found that a screw speed of 110 rpm was sufficient to prevent backup in the sugar feed port. The exit temperature was reduced to 51°C (123°F). Both of these values were considered acceptable. The finished product was also acceptable.

### Example 3

Although the run described in Example 2 was generally acceptable, there was a minor problem with unincorporated sugar as evidenced by an occasional puff of sugar dust from the extruder discharge. Although this problem was believed to be due to poor performance of the sugar feeder, it was remedied by the following changes.

A low shear half element in Section 4 was removed. The two conveyor elements were moved upstream to fill the gap created by removal of the half element. An additional low shear half element was added after the conveyor elements to increase mixing. The corn syrup/glycerin blend injection point was moved to a pin located after Port 5.

The screw speed was reduced to 109 rpm. The finished product exited at 50°C (122°F).

In summary, the foregoing examples indicate that the method of the invention can be used to prepare a wide variety of good quality chewing gum products in a single continuous mixer, without requiring the separate manufacture of gum base in a different mixer. This method is expected to save manufacturing time and money, and improve the product consistency and quality.

It should be appreciated that the method of the present invention is capable of being incorporated in the form of a variety of embodiments, only a few of which have been illustrated and described above. It will be appreciated that the addition of certain other ingredients, process steps, materials or components not specifically included will have an adverse impact on the present invention. The best mode of the invention may therefore exclude ingredients, process steps, materials or components other than those listed above for inclusion or use in the invention. However, the described embodiments are to be considered in all respects only as illustrative and not restrictive, and the scope of the invention is, therefore, indicated by the appended claims rather than by the foregoing description. All changes which come within the meaning and range of equivalency of the claims are to be embraced within their scope.

## Claims

1. A method of manufacturing chewing gum comprising the steps of:
a) providing a high efficiency continuous mixer that is a blade and pin mixer (100) comprising i) ingredient feed ports (212, 232, 242, 252, 262), each port having at least one opening into the mixer; ii) mixing elements (124); and iii) at least one conveyor element (125) on a screw (120) of the mixer; wherein at least one conveyor element (125) is located so that a majority of said element extends beyond the wall of said feed port (262), such that the majority of that conveyor element is not directly under an ingredient feed port;
b) either:
i) adding to the mixer (100), a finished gum base; or
ii) adding to the mixer (100), and mixing together at least one elastomer and filler; adding at least one ingredient selected from the group consisting of fats, oils, waxes and elastomer plasticizers, and mixing said ingredient(s) with the elastomer and filler in the mixer (100); and
c) adding at least one sweetener and at least one flavour, and mixing the sweetener and flavour with the other ingredients to form said chewing gum product, wherein after ingredients are added to the mixer, they are subjected to the conveyor element on the screw.

2. A method as claimed in claim 1 comprising:
continuously discharging the chewing gum product from the mixer.

3. A method as claimed in any one of claims 1 to 2 wherein the high efficiency continuous mixed includes at least one additional conveyor element located directly under ingredient addition port.

4. A method as claimed in any one of claims 1 to 3 wherein gum base is manufactured in the high efficiency continuous mixer.

5. A method as claimed in any one of claims 1 to 3 wherein finished gum base is added to the high efficiency continuous mixer.

6. A method as claimed in any one of claims 1 to 4 for continuously manufacturing chewing gum without requiring separate manufacture of a chewing gum base, comprising the steps of:
b) ii) adding into the mixer and mixing together at least one elastomer and filler;
adding at least one ingredient selected from the group consisting of fats, oils, waxes and elastomer plasticizers, and mixing said ingredient with the elastomer and filler in the mixer; and
c) adding at least one sweetener and at least one flavour, and mixing the sweetener and flavour with the other ingredients to form a chewing gum product, wherein after ingredients are added to the mixer, they are subjected to the conveyor element on the screw.

7. A method as claimed in claim 6 wherein the steps of b ii) and c) are performed using a total mixing length to diameter ratio of not more than 40.

8. A method as claimed in claim 6 wherein steps of b ii) and c) are performed using a total mixing length to diameter ratio of not more than 30.

## Patentansprüche

1. Verfahren zum Herstellen von Kaugummi, das die folgenden Schritte umfasst:
a) Bereitstellen eines kontinuierlich arbeitenden Hochleistungsmischers (100), der ein Flügel-und-Stiftmixer ist und umfasst: 1. Bestandteil-Zuführanschlüsse (212, 232, 242, 252, 262), wobei jeder Anschluss wenigstens eine Öffnung in den Mischer hinein aufweist; 2. Mischelemente (124); und 3. wenigstens ein Förderelement (125) an einer Schnecke (120) des Mischers, wobei wenigstens ein Förderelement (125) so angeordnet ist, dass sich ein Großteil des Elementes so über die Wand des Zuführanschlusses (262) hinaus erstreckt, dass der Großteil dieses Förderelementes sich nicht direkt unter einem Bestandteil-Zuführanschluss befindet;
b) entweder:
1. Zusetzen einer fertigen Gummibase zu dem Mischer (100); oder
2. Zusetzen wenigstens eines Elastomers und eines Füllstoff zu dem Mischer (100) und Vermischen derselben; Zusetzen wenigstens eines Bestandteils, der aus der Gruppe ausgewählt wird, die aus Fetten, Ölen, Wachsen und Elastomer-Plastifikatoren besteht, und Mischen des Bestandteils bzw. der Bestandteile mit dem Elastomer und dem Füllstoff in dem Mischer (100); und
c) Zusetzen wenigstens eines Süßungsmittels sowie wenigstens eines Geschmackstoffs und Mischen des Süßungsmittels sowie des Geschmacksstoffs mit den anderen Bestandteilen, um das Kaugummierzeugnis zu erzeugen, wobei, nachdem die Bestandteile dem Mischer zugesetzt worden sind, sie dem Förderelement an der Schnecke ausgesetzt werden.

2. Verfahren nach Anspruch 1, das umfasst:
kontinuierliches Ausgeben des Kaugummierzeugnisses aus dem Mischer.

3. Verfahren nach einem der Ansprüche 1 bis 2, wobei der kontinuierlich arbeitende Hochleistungsmischer wenigstens ein zusätzliches Förderelement enthält, das direkt unter dem Bestandteil-Zusetzanschluss angeordnet ist.

4. Verfahren nach einem der Ansprüche 1 bis 3, wobei die Gummibase in dem kontinuierlich arbeitenden Hochleistungsmischer hergestellt wird.

5. Verfahren nach einem der Ansprüche 1 bis 3, wobei fertige Gummibase dem kontinuierlich arbeitenden Hochleistungsmischer zugesetzt wird.

6. Verfahren nach einem der Ansprüche 1 bis 4 zum kontinuierlichen Herstellen von Kaugummi, ohne dass eine separate Herstellung einer Kaugummibase erforderlich ist, das die folgenden Schritte umfasst:
b) 1. Zusetzen wenigstens eines Elastomers und eines Füllstoffs in den Mischer und Vermischen derselben;
Zusetzen wenigstens eines Bestandteils, der aus der Gruppe ausgewählt wird, die aus Fetten, Ölen, Wachsen und Elastomer-Plastifikatoren besteht, und Mischen des Bestandteils mit dem Elastomer und dem Füllstoff in dem Mischer; und
c) Zusetzen wenigstens eines Süßungsmittels sowie wenigstens eines Geschmackstoffs und Mischen des Süßungsmittels sowie des Geschmackstoffs mit den anderen Bestandteilen, um ein Kaugummierzeugnis zu erzeugen, wobei, nachdem die Bestandteile dem Mischer zugesetzt worden sind, sie dem Förderelement an der Schnecke ausgesetzt werden.

7. Verfahren nach Anspruch 6, wobei die Schritte von b) 1. und c) unter Verwendung eines Verhältnisses von Gesamtmischlänge zu Durchmesser von nicht mehr als 40 durchgeführt werden.

8. Verfahren nach Anspruch 6, wobei die Schritte von b) 2. und c) unter Verwendung eines Verhältnisses von Gesamtmischlänge zu Durchmesser von nicht mehr als 30 durchgeführt werden.

## Revendications

1. Procédé de production de gomme à mâcher, comprenant les étapes qui consistant :
a) à utiliser un mélangeur continu (100) à haut rendement qui est un mélangeur à lames et broches comportant i) des orifices (212, 232, 242, 252, 262) de charge d'ingrédients, chaque orifice ayant au moins une ouverture débouchant dans le mélangeur ; ii) des éléments mélangeurs (124) ; et iii) au moins un élément transporteur (125) sur une vis (120) du mélangeur ; dans lequel au moins un élément transporteur (125) est placé de façon que la plus grande partie dudit élément s'étende au-delà de la paroi dudit orifice de charge (262), afin que la plus grande partie de cet élément transporteur ne soit pas directement sous un orifice de charge d'ingrédients ;
b) soit :
i) l'addition au mélangeur (100) d'une gomme-base finie ; soit
ii) d'addition au mélangeur (100), et le mélange ensemble d'au moins un élastomère et d'une charge ; l'addition d'au moins un ingrédient choisi dans le groupe consistant en des graisses, des huiles, des cires et des plastifiants élastomères, et le mélange dudit ingrédient ou desdits ingrédients avec l'élastomère et la charge dans le mélangeur (100) ; et
c) l'addition d'au moins un édulcorant et d'au moins un parfum, et le mélange de l'édulcorant et du parfum avec les autres ingrédients pour former ledit produit de gomme à mâcher, dans lequel après que les ingrédients ont été ajoutés au mélangeur, ils sont soumis à l'élément transporteur sur la vis.

2. Procédé selon la revendication 1, comprenant :
la décharge en continu du produit de gomme à mâcher du mélangeur.

3. Procédé selon l'une quelconque des revendications 1 à 2, dans lequel le mélangeur continu à haut rendement comprend au moins un élément transporteur supplémentaire placé directement en dessous de l'orifice d'addition d'ingrédients.

4. Procédé selon l'une quelconque des revendications 1 à 3, dans lequel la gomme-base est fabriquée dans le mélangeur continu à haut rendement.

5. Procédé selon l'une quelconque des revendications 1 à 3, dans lequel de la gomme-base finie est ajoutée au mélangeur continu à haut rendement.

6. Procédé selon l'une quelconque des revendications 1 à 4 pour produire en continu de la gomme à mâcher sans nécessiter la fabrication séparée d'une gomme-base à mâcher, comprenant les étapes qui consistant :
b) ii) à introduire dans le mélangeur et à mélanger ensemble au moins un élastomère et une charge ;
à ajouter au moins un ingrédient choisi dans le groupe consistant en des graisses, des huiles, des cires et des plastifiants élastomères, et à mélanger ledit ingrédient avec l'élastomère et la charge dans le mélangeur ; et
c) à ajouter au moins un édulcorant et au moins un arôme, et à mélanger l'édulcorant et l'arôme avec les autres ingrédients pour former un produit de gomme à mâcher, dans lequel, après que les ingrédients ont été ajoutés au mélangeur, ils sont soumis à l'élément transporteur sur la vis.

7. Procédé selon la revendication 6, dans lequel les étapes de b ii) et c) sont exécutées en utilisant un rapport de la longueur totale de mélange au diamètre non supérieur à 40.

8. Procédé selon la revendication 6, dans lequel les étapes de b ii) et c) sont exécutées en utilisant un rapport de la longueur de mélange totale au diamètre non supérieur à 30.
